# FASCICULE DE BREVET EUROPEEN

(11) **EP 1 361 125 B1**
(45) Date de publication et mention de la délivrance du brevet: **15.12.2004**
(21) Numéro de dépôt: 03009596.2
(22) Date de dépôt: 29.04.2003
(51) Int. Cl.: B60T 13/52

(54) **Servomoteur utilisant un joint d'étanchéité à montage externe**
Bremskraftverstärker mit einer an der Aussenseite angebrachten Dichtung
Brake booster having an externally mounted seal

(30) Priorité: 07.05.2002 FR 0205773
(43) Date de publication de la demande: 12.11.2003
(73) Titulaire: ROBERT BOSCH GmbH, 70442 Stuttgart (DE)
(72) Inventeur: Michon, Jean-Pierre, 77178 Saint-Pathus (FR); Beylerian, Bruno, 95380 Louvres (FR)
(74) Mandataire: Hurwic, Aleksander Wiktor

(56) Documents cités:
- EP-A- 0 035 370
- DE-A- 3 113 271
- DE-A- 3 912 373
- FR-A- 2 430 338
- FR-A- 2 782 046
- US-A- 5 904 088
- PATENT ABSTRACTS OF JAPAN vol. 006, no. 134 (M-144), 21 juillet 1982 (1982-07-21) & JP 57 058549 A (SUMITOMO ELECTRIC IND LTD), 8 avril 1982 (1982-04-08)
- PATENT ABSTRACTS OF JAPAN vol. 1998, no. 03, 27 février 1998 (1998-02-27) & JP 09 295570 A (JIDOSHA KIKI CO LTD), 18 novembre 1997 (1997-11-18)

## Description

La présente invention concerne, de façon générale, les systèmes de freinage hydraulique de véhicules automobiles dotés d'une assistance pneumatique au freinage.

Plus précisément, l'invention concerne un servomoteur pneumatique d'assistance au freinage comprenant une enveloppe rigide localement conformée en une cheminée percée d'une ouverture, une cloison mobile, un moyeu solidaire de la cloison mobile, un joint d'étanchéité annulaire, un soufflet, un clapet logé dans le moyeu, et une tige de commande, le moyeu étant cylindrique et monté coulissant dans l'ouverture de la cheminée, la tige de commande étant montée mobile dans le moyeu pour actionner le clapet, le joint d'étanchéité assurant une étanchéité entre le moyeu et la cheminée, et le soufflet présentant une première extrémité fixée à la tige de commande et une seconde extrémité fixée à la cheminée.

Des dispositifs de ce type sont bien connus dans l'art antérieur, tel qu'illustré par exemple par les documents de brevets US - 3 470 697, FR - 2 532 084, et FR - 2 658 466.

En dépit du caractère relativement traditionnel de la technique concernée, les servomoteurs continuent de faire l'objet de recherches qui visent notamment à en réduire encore les coûts de fabrication par une plus grande facilité de montage.

La présente invention, qui s'inscrit dans ce contexte, a pour but de proposer un servomoteur répondant à ce besoin.

A cette fin, le servomoteur selon l'invention, par ailleurs conforme à la définition générique qu'en donne le préambule ci-dessus, est essentiellement caractérisé en ce qu'une gorge périphérique externe est pratiquée dans la cheminée, en ce que le joint d'étanchéité est solidaire d'un bourrelet de retenue engagé dans la gorge de la cheminée, et en ce que le joint d'étanchéité s'étend tout entier à l'extérieur de la cheminée.

Grâce à cet agencement, le soufflet et le joint d'étanchéité peuvent être montés sur le servomoteur à la fin de l'assemblage de ce dernier, et dans des conditions d'accessibilité idéales puisque ce montage est effectué à l'extérieur du servomoteur.

Dans le mode de réalisation préféré de l'invention, le joint d'étanchéité comprend une lèvre annulaire en appui sur le moyeu à l'extérieur de la cheminée, en regard de l'ouverture.

Ce joint d'étanchéité peut même se réduire à la lèvre annulaire, être formé d'une seule pièce avec le soufflet, et faire saillie de l'intérieur de ce soufflet.

Grâce à cet agencement, le montage du soufflet et du joint d'étanchéité est encore simplifié puisqu'il ne requiert qu'une unique opération de montage.

Le bourrelet de retenue peut être disposé à la seconde extrémité du soufflet et la lèvre peut faire saillie de l'intérieur du soufflet à distance du bourrelet.

En variante, il est possible de prévoir que la gorge soit formée par repli d'un bord de l'ouverture de la cheminée, que le bourrelet de retenue soit disposé à la seconde extrémité du soufflet, et que la lèvre soit adjacente au bourrelet de retenue.

Dans tous les cas de figures, un second bourrelet de retenue est avantageusement formé à la première extrémité du soufflet et engagé dans une rainure pratiquée dans la tige de commande.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en coupe longitudinale d'un module de freinage connu comprenant un servomoteur et un maître-cylindre;
- la Figure 2 est une vue en coupe longitudinale partielle agrandie d'un servomoteur conforme à un premier mode de réalisation de l'invention;
- la Figure 3 est une vue en coupe longitudinale partielle agrandie d'un servomoteur conforme à un deuxième mode de réalisation de l'invention; et
- la Figure 4 est une vue en coupe longitudinale partielle agrandie d'un servomoteur conforme à un troisième mode de réalisation de l'invention.

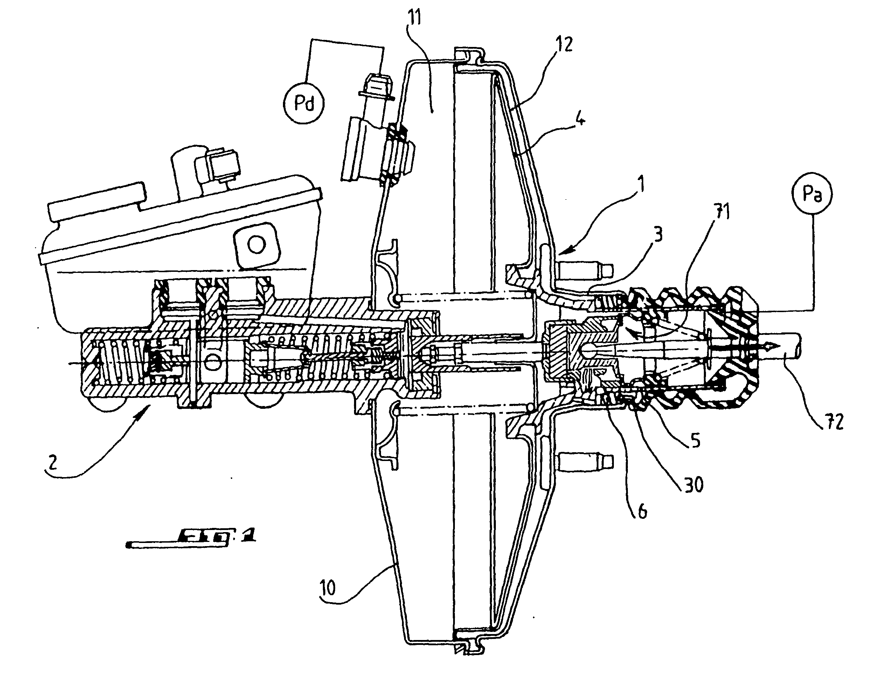

Un servomoteur pneumatique d'assistance au freinage, tel que 1 (figure 1) est traditionnellement utilisé pour faciliter l'actionnement d'un maître-cylindre 2 auquel il est couplé.

Un tel servomoteur comprend, de façon connue en soi, une enveloppe rigide 10 localement conformée en une cheminée cylindrique 3 percée d'une ouverture 30.

Une cloison mobile 2 sépare de façon étanche l'intérieur de l'enveloppe rigide 10 et y délimite une chambre avant 11 et une chambre arrière 12, ces chambres ayant des volumes variables et complémentaires.

En fonctionnement, la chambre avant 11 est soumise à une première pression Pd relativement basse, à laquelle la chambre arrière 12 est également soumise lorsque le servomoteur est au repos.

La cloison mobile 4 est solidaire d'un moyeu cylindrique 5 monté coulissant au travers de l'ouverture 30 de la cheminée 3, un joint d'étanchéité annulaire 6 étant prévu pour assurer une étanchéité entre le moyeu 5 et la cheminée 3.

Le servomoteur est actionné par l'intermédiaire d'une tige de commande 72 qui est montée mobile dans le moyeu 5 et qui agit sur un clapet pneumatique 71 logé dans le moyeu 5.

Lorsque le servomoteur est actionné, la chambre arrière 12 est soumise à une pression contrôlée à une valeur supérieure à celle de la pression Pd régnant dans la chambre avant 11 et qui peut par exemple atteindre la pression atmosphérique Pa, de sorte que la différence de pression entre les chambres avant et arrière développe une force d'assistance au freinage, qui est utilisée pour actionner le maître-cylindre 2.

De façon traditionnelle, le soufflet 62 est respectivement fixé à la tige de commande 72 et à la cheminée 3 par son extrémité la plus externe 621 et par son extrémité la plus interne 622.

Selon l'invention, une gorge périphérique externe 31 est pratiquée dans la cheminée 3, le joint d'étanchéité 61 étant solidaire d'un bourrelet de retenue 63 engagé dans cette gorge 31 et s'étendant tout entier à l'extérieur de la cheminée 3.

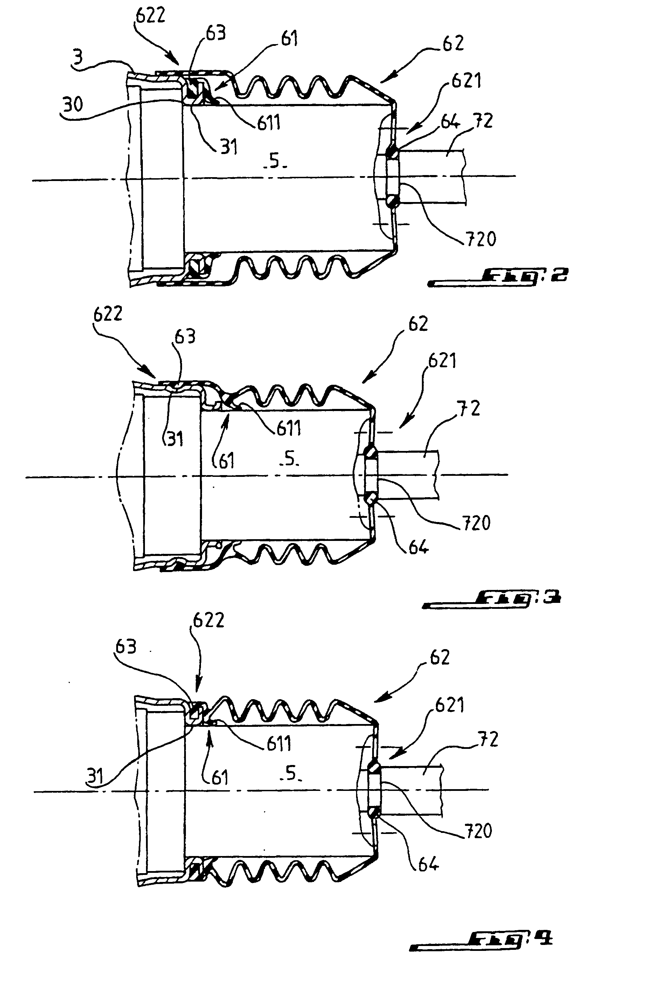

Comme le montrent les figures 1 et 3, la gorge 31 peut être formée par repli du bord de l'ouverture 30 de la cheminée 3.

Comme le montre la figure 2, le joint d'étanchéité 61 comprend de préférence au moins une lèvre annulaire 611 qui s'appuie sur le moyeu 5 à l'extérieur de la cheminée 3, en regard de l'ouverture 30.

Ce joint d'étanchéité 61 peut même se réduire à la lèvre annulaire 611, comme c'est le cas dans le mode de réalisation illustré à la figure 3, auquel cas ce joint est formé d'une seule pièce avec le soufflet 62 et fait saillie de l'intérieur de ce soufflet 62.

Par ailleurs, comme le montre la figure 3, le bourrelet de retenue 63 peut alors être disposé à l'extrémité 622 la plus interne du soufflet 62, la lèvre 611 faisant saillie de l'intérieur du soufflet 62 à distance du bourrelet 63.

Dans le mode de réalisation illustré à la figure 4, le bourrelet de retenue 63 est disposé à l'extrémité la plus interne 622 du soufflet 62, et la lèvre 611 du joint 61 est adjacente au bourrelet de retenue 63.

Dans tous les cas de figures, il est avantageux de prévoir un second bourrelet de retenue 64, qui est formé à l'extrémité la plus externe 621 du soufflet 62, et qui est engagé dans une rainure 720 pratiquée dans la tige de commande 72.

## Revendications

1. Servomoteur pneumatique d'assistance au freinage comprenant une enveloppe rigide (10) localement conformée en une cheminée (3) percée d'une ouverture (30), une cloison mobile (4), un moyeu (5) solidaire de la cloison mobile (4), un joint d'étanchéité annulaire (61), un soufflet (62), un clapet (71) logé dans le moyeu (5), et une tige de commande (72), le moyeu (5) étant cylindrique et monté coulissant dans l'ouverture (30) de la cheminée (3), la tige de commande (72) étant montée mobile dans le moyeu (5) pour actionner le clapet (71), le joint d'étanchéité (61) assurant une étanchéité entre le moyeu (5) et la cheminée (3), et le soufflet (62) présentant une première extrémité (621) fixée à la tige de commande (72) et une seconde extrémité (622) fixée à la cheminée (3), **caractérisé en ce qu'**une gorge périphérique externe (31) est pratiquée dans la cheminée (3), **en ce que** le joint d'étanchéité (61) est solidaire d'un bourrelet de retenue (63) engagé dans la gorge (31) de la cheminée, et **en ce que** le joint d'étanchéité (61) s'étend tout entier à l'extérieur de la cheminée (3).

2. Servomoteur pneumatique suivant la revendication 1, **caractérisé en ce que** le joint d'étanchéité (61) comprend une lèvre annulaire (611) en appui sur le moyeu (5) à l'extérieur de la cheminée (3), en regard de l'ouverture (30).

3. Servomoteur pneumatique suivant la revendication 2, **caractérisé en ce que** le joint d'étanchéité (61) se réduit à la lèvre annulaire (611), est formé d'une seule pièce avec le soufflet (62), et fait saillie de l'intérieur de ce soufflet (62).

4. Servomoteur pneumatique suivant la revendication 3, **caractérisé en ce que** le bourrelet de retenue (63) est disposé à la seconde extrémité (622) du soufflet (62) et **en ce que** la lèvre (611) fait saillie de l'intérieur du soufflet (62) à distance du bourrelet (63).

5. Servomoteur pneumatique suivant la revendication 2, **caractérisé en ce que** la gorge (31) est formée par repli d'un bord de l'ouverture (30) de la cheminée (3), **en ce que** le bourrelet de retenue (63) est disposé à la seconde extrémité (622) du soufflet (62), et **en ce que** la lèvre (611) est adjacente au bourrelet de retenue (63).

6. Servomoteur pneumatique suivant l'une quelconque des revendications précédentes, **caractérisé en ce qu'**un second bourrelet de retenue (64) est formé à la première extrémité (621) du soufflet (62) et engagé dans une rainure (720) pratiquée dans la tige de commande (72).

## Patentansprüche

1. Pneumatischer Servomotor zur Bremsunterstützung, aufweisend ein starres Gehäuse (10), das lokal als Schacht (3) ausgebildet ist, der mit einer Öffnung (30) durchsetzt ist, eine bewegliche Wand (4), eine Nabe (5), die fest mit der beweglichen Wand (4) verbunden ist, eine ringförmige Dichtung (61), einen Balg (62), ein Ventil (71), das in der Nabe (5) liegt, und eine Steuerstange (72), wobei die Nabe (5) zylindrisch und gleitend in der Öffnung (30) des Schachts (3) angebracht ist, wobei die Steuerstange (72) in der Nabe (5) beweglich angebracht ist, um das Ventil (71) zu betätigen, wobei die Dichtung (61) eine Dichtigkeit zwischen der Nabe (5) und dem Schacht (3) gewährleistet und wobei der Balg (62) ein erstes Ende (621) aufweist, das an der Steuerstange (72) befestigt ist, und ein zweites Ende (622), das am Schacht (3) befestigt ist, **dadurch gekennzeichnet, dass** eine äußere Umfangsnut (31) in dem Schacht (3) gebildet ist, dass die Dichtung (61) fest mit einem Haltewulst (63) verbunden ist, welcher in der Nut (31) des Schachts eingesetzt ist, und dass die Dichtung (61) sich vollständig außerhalb des Schachts (3) erstreckt.

2. Pneumatischer Servomotor nach Anspruch 1, **dadurch gekennzeichnet, dass** die Dichtung (61) eine ringförmige Lippe (611) aufweist, die sich an der Nabe (5) außerhalb des Schachts (3) gegenüber der Öffnung (30) abstützt.

3. Pneumatischer Servomotor nach Anspruch 2, **dadurch gekennzeichnet, dass** die Dichtung (61) auf die ringförmige Lippe (611) reduziert ist, einstückig mit dem Balg (62) gebildet ist und vom Inneren dieses Balgs (62) hervorvorsteht.

4. Pneumatischer Servomotor nach Anspruch 3, **dadurch gekennzeichnet, dass** der Haltewulst (63) an dem zweiten Ende (622) des Balgs (62) angeordnet ist und dass die Lippe (611) vom Inneren des Balgs (62) vom Wulst (63) beabstandet hervorsteht.

5. Pneumatischer Servomotor nach Anspruch 2, **dadurch gekennzeichnet, dass** die Nut (31) durch Falten eines Randes der Öffnung (30) des Schachts (3) gebildet ist, dass der Haltewulst (63) an dem zweiten Ende (622) des Balgs (62) angeordnet ist und dass die Lippe (611) an den Haltewulst (63) angrenzt.

6. Pneumatischer Servomotor nach einem der vorhergehenden Ansprüche, **dadurch gekennzeichnet, dass** ein zweiter Haltewulst (64) an dem ersten Ende (621) des Balgs (62) gebildet und in einer in der Steuerstange (72) gebildeten Rille (720) eingesetzt ist.

## Claims

1. Pneumatic servomotor for an assisted braking, comprising a rigid casing (10), which is locally shaped into a shaft (3) in which an opening (30) is made, a moving partition wall (4), a hub (5) integral with the moving partition wall (4), a ring-shaped seal (61), a bellows (62), a valve (71) accommodated inside the hub (5), and a control rod (72), wherein the hub (5) is cylindrical and fitted for a sliding motion through the opening (30) of the shaft (3), the control rod (72) being fitted for a translation motion inside the hub (5) for the actuation of the valve (71), and the seal (61) providing for the tightness between the hub (5) and the shaft (3), and wherein the bellows (62) has a first end (621) fastened to the control rod (72) and a second end (622), which is attached to the shaft (3), **characterised in that** an outer peripheral groove (31) is made in the shaft (3), **in that** the seal (61) is integral with a retaining bead (63) received in the groove (31) made in the shaft, and **in that** the whole seal (61) is situated outside the shaft (3).

2. Pneumatic servomotor according to claim 1, **characterised in that** the seal (61) comprises an annular lip (611), resting on the hub (5) on the outside of the shaft (3) and facing the opening (30).

3. Pneumatic servomotor according to claim 2, **characterised in that** the seal (61) consists of the annular lip (611) alone, is made in a single piece with the bellows (62) and protrudes from the inner surface of said bellows (62).

4. Pneumatic servomotor according to claim 3, **characterised in that** the retaining bead (63) is disposed at the second end (622) of the bellows (62), and **in that** the lip (611) protrudes from the inner surface of the bellows (62), at a distance from the bead (63).

5. Pneumatic servomotor according to claim 2, **characterised in that** the groove (31) is formed by a turned up edge of the opening (30) of the shaft (3), **in that** the retaining bead (63) is disposed at the second end (622) of the bellows (62), and **in that** the lip (611) is adjacent to the retaining bead (63).

6. Pneumatic servomotor according to any one of the preceding claims, **characterised in that** a second retaining bead (64) is formed at the first end (621) of the bellows (62) and accommodated in a slot (720) made in the control rod (72).
